(19) Europäisches Patentamt
European Patent Office
Office européen des brevets

(11) Publication number: **0 611 023 A2**

# (12) EUROPEAN PATENT APPLICATION

(21) Application number: **94201413.5**

(51) Int. Cl.[5]: **B60C 9/26**

(22) Date of filing: **04.11.91**

This application was filed on 18 - 05 - 1994 as a divisional application to the application mentioned under INID code 60.

(30) Priority: **06.11.90 JP 301659/90**

(43) Date of publication of application: **17.08.94 Bulletin 94/33**

(60) Publication number of the earlier application in accordance with Art.76 EPC: **0 485 136**

(84) Designated Contracting States: **DE FR GB**

(71) Applicant: **SUMITOMO RUBBER INDUSTRIES, CO. LTD**
**No. 1-1, Tsutsui-cho 1-chome**
**Chuo-ku Kobe-shi Hyogo-ken 651 (JP)**

(72) Inventor: **Iseki, Tsutomu, 1-5 Aza-doujyoumen**
**Oaza-Banzawa,**
**Omotego-mura**
**Nishi-shirakawa-gen, Fukushima-ken (JP)**
Inventor: **Sakamoto, Masayuki**
**Nankorya-2,**
**23-1 Higashioonuma**
**Shirakawa-shi, Fukishima-ken (JP)**

(74) Representative: **Stewart, Charles Geoffrey**
**SP TYRES UK LIMITED**
**Tyre Technical Division**
**Fort Dunlop, Erdington, Birmingham B24 9OT (GB)**

## (54) Pneumatic tyre.

(57) A pneumatic tyre comprising a carcass (5) extending between beads (4) and a belt (6) disposed radially outside the carcass (5) and inside a tread (2) and having opposite axial edges (F1,F2), wherein the belt (6) comprises a ribbon (10) of rubber in which a plurality of cords (11) are embedded extending in the longitudinal direction thereof, and the ribbon (10) is continuously wound around the carcass (6) and folded back at the edges of the belt to extend zigzag between the edges of the belt so as to define ribbon segments comprising cord segments extending between the edges (F1,F2) of the belt, the cord segments including first cord segments (61) and second cord segments (62), the first cord segments (61) being laid substantially parallel to each other, and the second cord segments (62) being laid substantially parallel to each other and crosswise to the first cord segments (61) characterised in that the folding back of the ribbon (10) at each edge (F1,F2) is from radially inwards to outwards, the zigzag pitch (Pt) is substantially equal to an integral number of times the circumferential width (P) of the ribbon, whereby the ribbon segments (61,62) are arranged tightly together in the circumferential direction of the tyre with respect to the tyre equator, and the first cord segments (61) are inclined symmetrically to the second cord segments (62).

Fig. 6

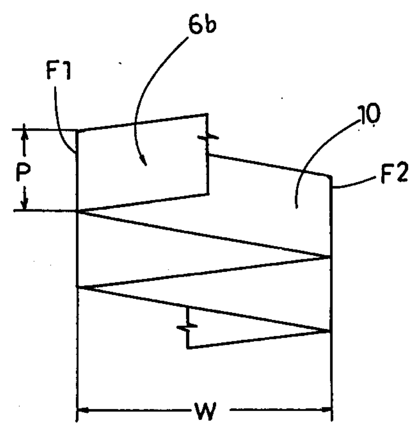


EP 0 611 023 A2

The present invention relates to a pneumatic tyre and more particularly an improvement in a tread reinforcing belt.

In general, a radial pneumatic tyre is provided radially outside the carcass with a belt to reinforce the tread portion.

In a conventional belt structure, as shown in Figs.7 and 8, a belt ply (p) is formed by wrapping a strip (e) of rubberised parallel cords (b) around the carcass. The strip (e) of rubberised parallel cords (b) is made by cutting a sheet of tyre fabric (d) at a bias angle ($\alpha$). The ends (f) of the strip (e) are joined by overlapping one end on the other with a small overlap, and a lap joint running at the bias angle ($\alpha$) is thus formed. The belt also has two side edges around the tyre circumference which have cut ends for the cords forming the belt.

As a result of the bias joint, steering stability and directional stability during straight running are liable to be disturbed. This is particularly seen during high speed running. Further, durability is impaired due to the cord cut ends where rubber/cord separation failure arises leading to breaker edge looseness.

In order to solve those problems, a jointless belt formed by spirally winding a continuous cord around the carcass at a small angle to the tyre equator has been proposed in, for example, Japanese Utility-Model Publication No.58-160805. However, due to the spiral cord arrangement, drifting of the vehicle to one side is liable to occur as the tyre has a sideways bias.

It is therefore, an object of the present invention to provide a pneumatic tyre which can solve the problems of stability, durability and drifting.

According to one aspect of the present invention, a pneumatic tyre comprises a carcass extending between beads and a belt disposed radially outside the carcass and inside a tread and having opposite axial edges, wherein the belt comprises a ribbon of rubber in which a plurality of cords are embedded extending in the longitudinal direction thereof, and the ribbon is continuously wound around the carcass and folded back at the edges of the belt to extend zigzag between the edges of the belt so as to define ribbon segments comprising cord segments extending between the edges of the belt, the cord segments including first cord segments and second cord segments, the first cord segments being laid substantially parallel to each other, and the second cord segments being laid substantially parallel to each other and crosswise to the first cord segments characterised in that the folding back of the ribbon at each edge is from radially inwards to outwards, the zigzag pitch is substantially equal to an integral number of times the circumferential width of the ribbon, whereby the ribbon segments are arranged tightly together in the circumferential direction of the tyre with respect to the tyre equator, and the first cord segments are inclined symmetrically to the second cord segments.

Embodiments of the present invention will now be described in detail in conjunction with the accompanying drawings, in which:

Fig.1 is a cross sectional view of a tyre according to the present invention;

Fig.2 is a developed plan view of a belt and a carcass;

Fig.3 is a perspective view of a ribbon of reinforced rubber used to form the belt;

Fig.4 is a developed plan view showing a method of making the belt;

Fig.5 is a developed plan view of another example of the belt;

Fig.6 is a developed plan view of still another example of the belt;

Fig.7 is a developed plan view of a carcass and conventional belt structure; and

Fig.8 is a plan view of the tyre fabric used to form the conventional belt.

In the figures, a pneumatic tyre 1 has a tread 2, a pair of axially spaced bead portions 4, and a pair of sidewalls 3 extending between the tread edges and the bead portions 4. A bead core 4A is disposed in each bead portion 4 and a toroidal carcass 5 extends between the bead portions 4 and is turned up around the bead cores 4A. A jointless belt 6 is disposed radially outside the carcass 5 and inside the tread 2.

The carcass 5 in this embodiment comprises one ply of organic fibre cords, e.g. nylon, aromatic polyamide or the like, arranged radially at an angle of 60 to 90 degrees with respect to the tyre equator C so as to provide a radial or a so called semiradial ply construction.

The belt 6 comprises at least one continuous cord which is wound at least once around the carcass while running zigzag from one edge to the other edge of the belt, so that the or each belt cord has first parallel cord segments inclined at a bias angle ($\alpha$) with respect to the tyre equator and second parallel cord segments inclined at the same bias angle ($\alpha$) but in the opposite symmetrical direction with respect to the tyre equator.

Note that each cord segment is a substantially straight cord portion defined as extending from one edge to the other edge of the belt. By such an arrangement of the cord segments, the first cord segments cross the second cord segments.

Fig.2 shows a first example of the belt 6, in which several parallel cords 11 in the form of a strip are wound together several times around the carcass. In this example, the first parallel cord segments 61 are located radially inside the second parallel cord segments 62.

Fig.3 shows a strip or ribbon 10 of rubber. In order to make the belt, such a ribbon is used. In the ribbon, one belt cord or several parallel belt cords 11 is/are embedded in coating rubber 12.

The number of embedded cords 11 is in the range of 1 to 10. In the example shown in Fig.3, the number is 7, and the cross sectional shape of the ribbon 10 is a flat rectangle.

Preferably, the width Wo of the ribbon 10 is in the range of 5 to 15 mm.

For the belt cords 11, organic fibre cords, e.g. nylon, polyester, aromatic polyamide or the like or steel cords can be used. Preferably, aromatic polyamide fibre cords are used for their high modulus, which corresponds to that of steel cords, and their light weight.

Fig.4 shows a method of making the belt 6 shown in Fig.2, wherein one ribbon 10 is wound around the tyre a plurality of times (n) as follows:-

In the fist winding, the ribbon extends at an angle ($\alpha$) from a starting point S to the other (left side) belt edge F1;

A) at the other left side edge F1, the ribbon is folded back radially inwardly;

B) the next section of ribbon extends at angle ($\alpha$) to the right side edge F2;

C) at the right side edge F2, the ribbon is folded back radially outwardly;

D) the next section of ribbon extends at angle ($\alpha$) to the left side belt edge F1;

A) to D) are repeated until the ribbon returns to the starting point of the second winding which point is adjacent to the previous starting point S.

In the subsequent second winding around the tyre and third, fourth, --- and last (n)th windings, the ribbon is wound in the same way as the first winding.

By winding the ribbon (n)-times around the tyre, the belt becomes complete and closely packed. In other words, no spaces are left between the circumferentially adjacent ribbon segments (used in the same sense as the above-mentioned cord segments).

The zigzag pitch Pt in the circumferential direction of the tyre is (n) times the circumferential width P of the ribbon.

In the second to last windings, each of the starting points therefor is located before the previous starting point. That is, the circumferential length of one winding is smaller than that of the belt, and the difference therebetween is the circumferential width P of the ribbon ($P = Wo/\sin(\alpha)$).

After the (n)-time winding of the ribbon, the terminal end thereof returns to the first starting point S and is joined to the starting end.

As described above, in this example, the ribbon is always folded back from a radially outward direction to a radially inward direction at the left side edge F1 and from radially inward to radially outward at the right side edge F2.

Accordingly, the ribbon is wound spirally and continuously around the central plane of the belt while being wound around the carcass generally.

Such a spiral-folding type belt is formed separately from the carcass, and thereafter they are assembled.

Fig.5 shows a modification of the above-explained belt 6. In this belt 6a, the zigzag pitch Pt is equal to the circumferential width P of the ribbon, and accordingly the bias angle of the belt cords becomes larger, and the ribbon is wound once around the carcass.

Fig.6 shows a modification of the belt 6a shown in Fig.5. In this belt 6b, the folding-back directions of the ribbon at the belt edges are altered such that the ribbon is folded back from radially inside to outside at both the edges F1 and F2, which makes it possible to form the belt 6b directly on the carcass. It is however, also possible to form this belt separately from the carcass.

Such one-way folding can be applied to the first example belt 6.

Further, in the belts in which the ribbon is wound a plurality of times around the carcass, for example the belt 6 and the belt 6 combined with the one-way folding, the circumferential length of one winding of the ribbon can be larger than that of the belt.

The difference therebetween is set to be the circumferential width P of the ribbon.

In other words, the starting points for the second to last windings are positioned behind and adjacent to the respective previous starting points.

The above-mentioned bias angle ($\alpha$) of the ribbon 10 or belt cords 11 may be in the range of 10 to 80 degrees with respect to the tyre equator.

In the above-mentioned examples, the edges of the adjacent ribbon segments are not overlapped. However, they may be slightly overlapped.

In the above-mentioned one-way folding, after one belt layer is formed, that is the ribbon returns to the first starting point, a further layer can be formed successively thereon by continuously winding the ribbon therearound.

In such a case, the axial extent W of the zigzag is preferably changed to be narrower or wider than the other layer.

Further, in the spiral folding explained in the first and second example belts 6 and 6a, after one belt layer is formed, a further layer can be formed successively by continuously winding the ribbon around the previously formed belt layer.

Furthermore, a belt layer made of a strip of conventional tyre fabric can be combined with the above- mentioned zigzag cord belts 6, 6a and 6b.

For example, a fabric belt layer may be disposed between the radially outer segments 62 and the radially inner segments 61 of the zigzag cord belt formed by spiral folding, or a fabric belt layer may be disposed radially outside or inside the zigzag cord belt.

As described above, in the pneumatic tyre according to the present invention, the belt is provided with an endless structure with respect to the circumferential direction of the tyre, and there is no cord cut end at the edges, and further, the first cord segments cross the second cord segments.

Therefore, belt edge looseness and rubber separation are effectively prevented, and durability of the tread portion is improved. The endless structure and cross structure provide a rigid and uniform reinforcement for the tread portion, and straight running performance and steering stability are improved.

## Claims

**1.** A pneumatic tyre comprising a carcass (5) extending between beads (4) and a belt (6) disposed radially outside the carcass (5) and inside a tread (2) and having opposite axial edges (F1,F2), wherein the belt (6) comprises a ribbon (10) of rubber in which a plurality of cords (11) are embedded extending in the longitudinal direction thereof, and the ribbon (10) is continuously wound around the carcass (6) and folded back at the edges of the belt to extend zigzag between the edges of the belt so as to define ribbon segments comprising cord segments extending between the edges (F1,F2) of the belt, the cord segments including first cord segments (61) and second cord segments (62), the first cord segments (61) being laid substantially parallel to each other, and the second cord segments (62) being laid substantially parallel to each other and crosswise to the first cord segments (61) characterised in that the folding back of the ribbon (10) at each edge (F1,F2) is from radially inwards to outwards, the zigzag pitch (Pt) is substantially equal to an integral number of times the circumferential width (P) of the ribbon, whereby the ribbon segments (61,62) are arranged tightly together in the circumferential direction of the tyre with respect to the tyre equator, and the first cord segments (61) are inclined symmetrically to the second cord segments (62).

**2.** A tyre according to claim 1, characterised in that the starting point for the winding of the ribbon (10) is before the starting point for the previous adjacent winding.

**3.** A tyre according to claim 1, characterised in that the starting point for the winding of the ribbon (10) is behind the starting point for the previous adjacent winding.

**4.** A tyre according to claim 2 or 3 characterised in that the belt (6) consists of a continuous ribbon wound a plurality of times around the carcass.

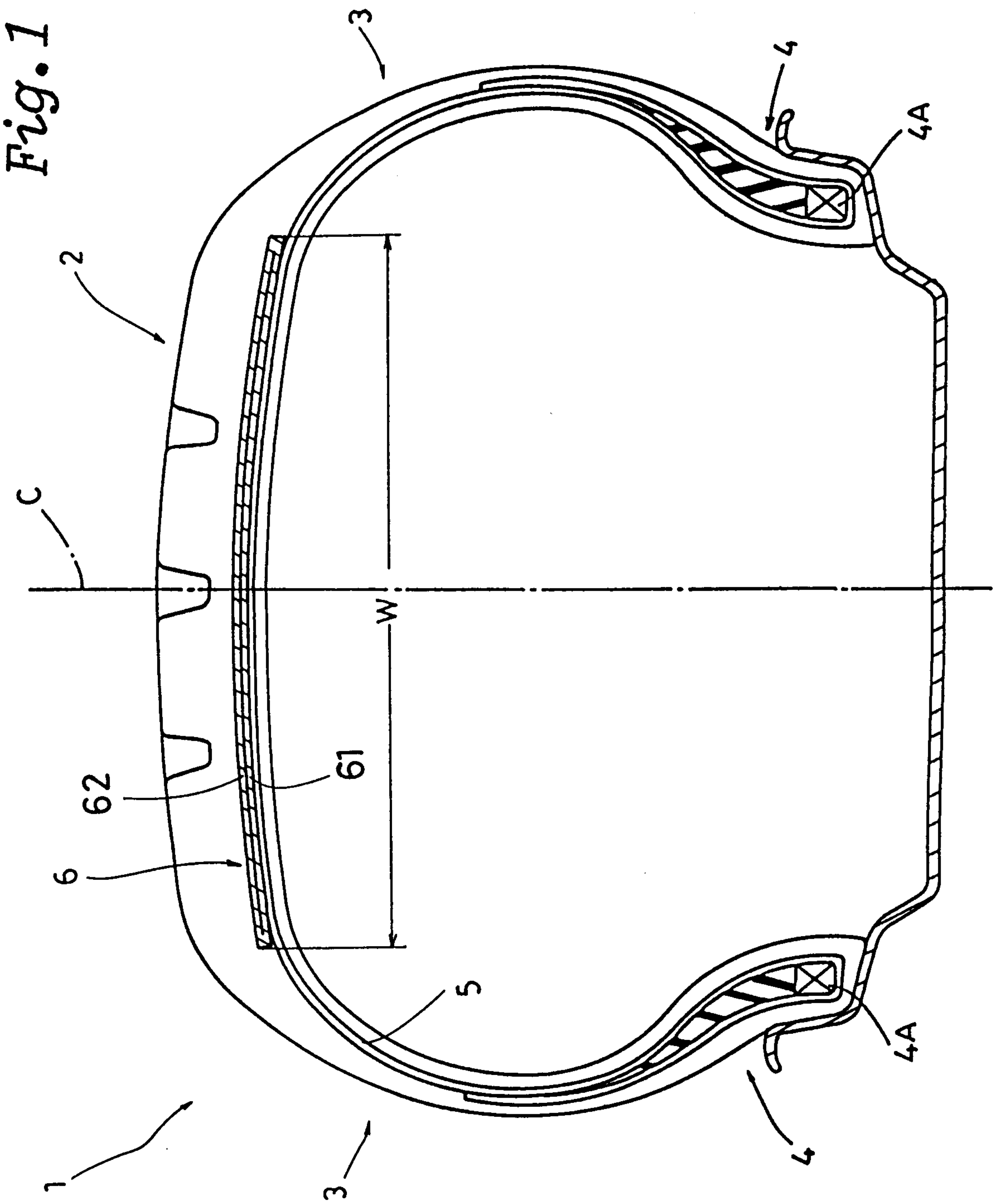


Fig. 1

*Fig. 2*

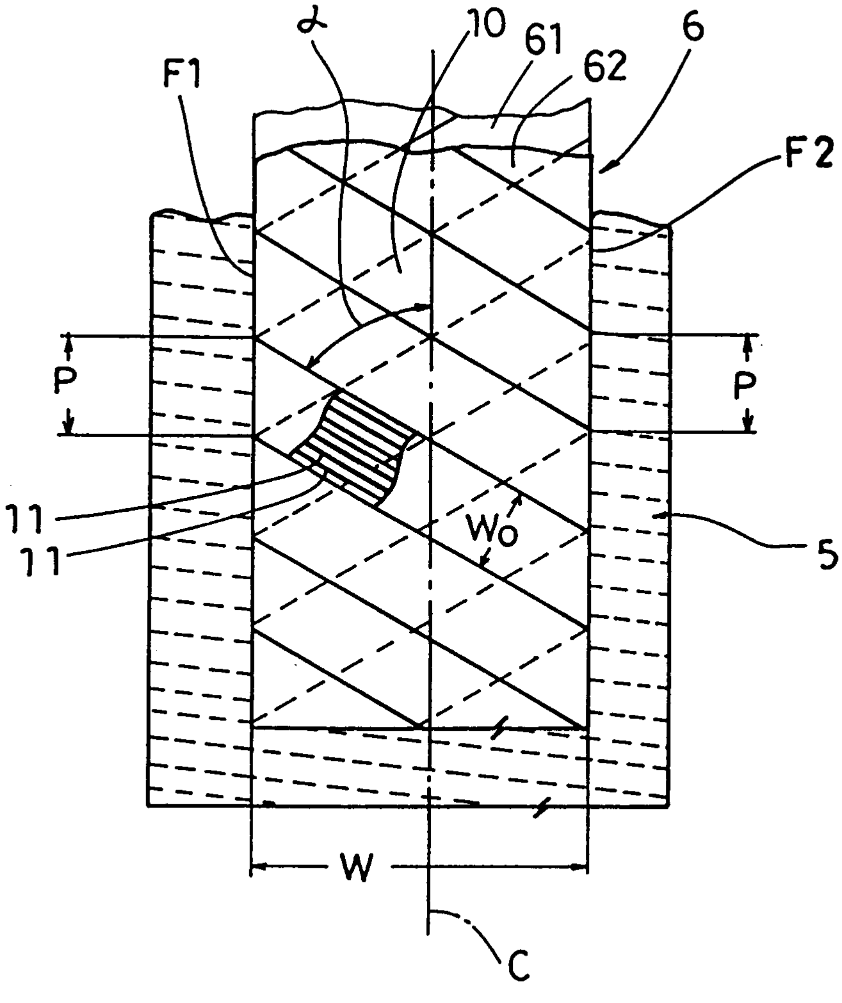

Fig. 3

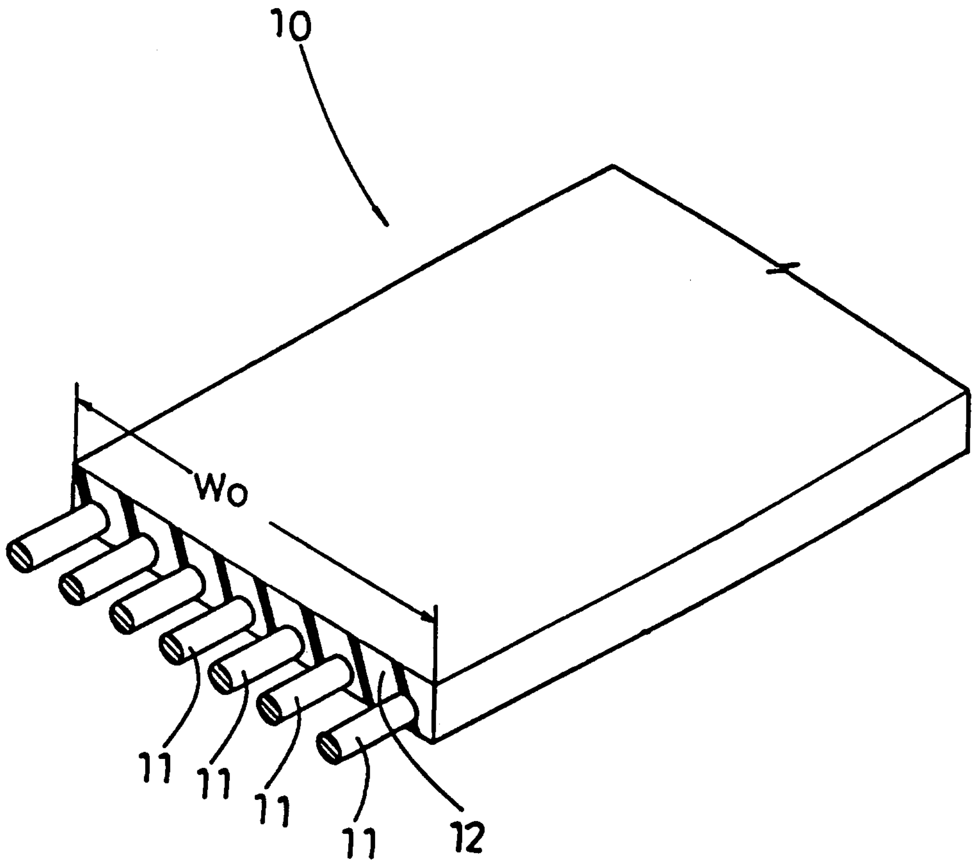

Fig.4

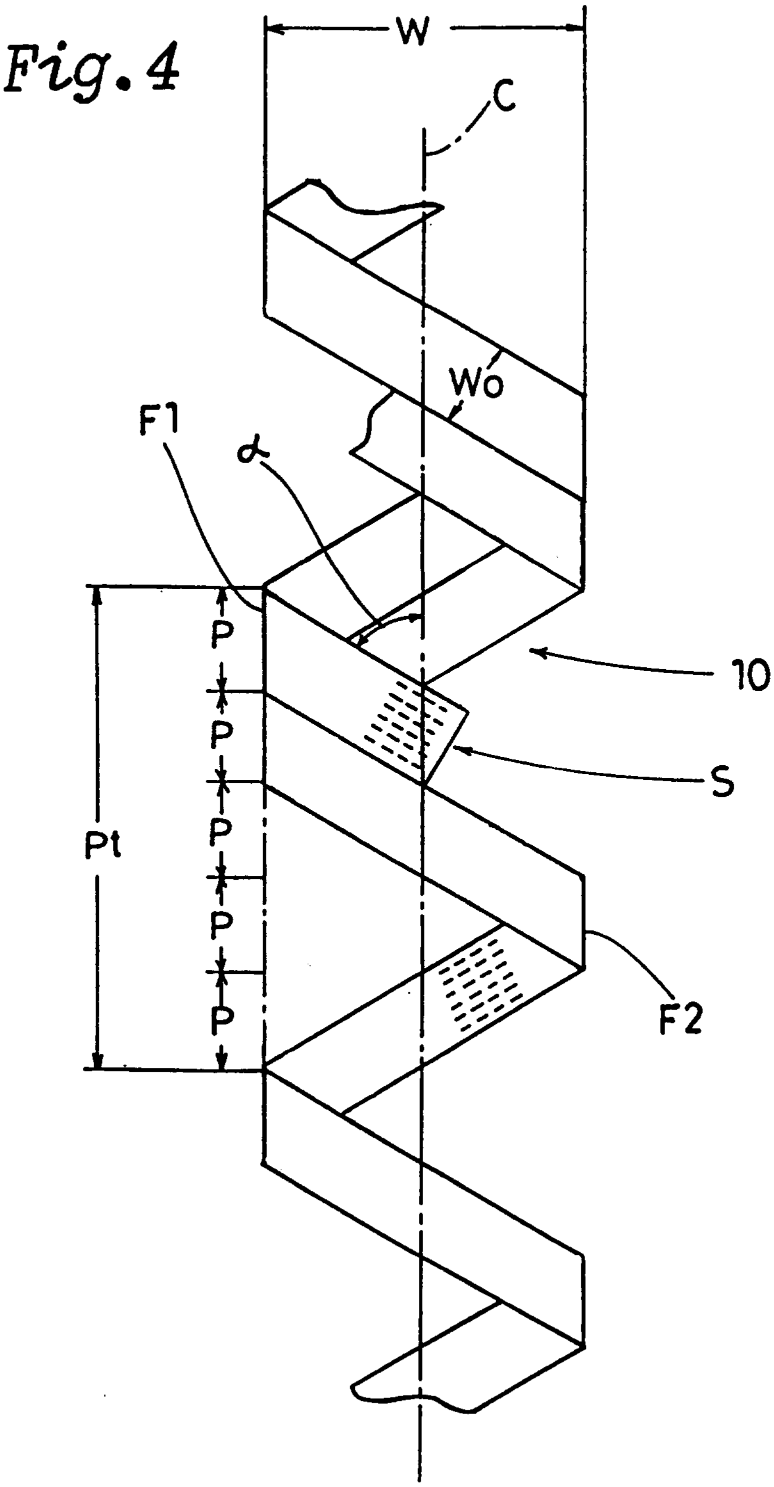

Fig. 5

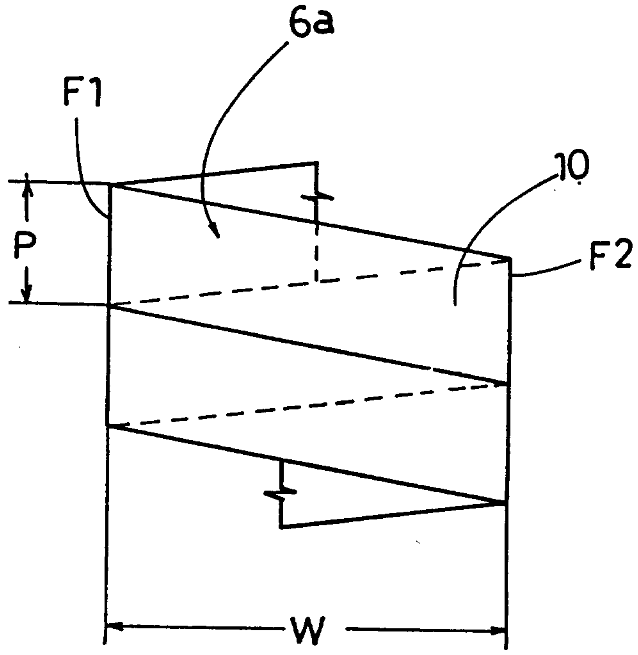


Fig. 6

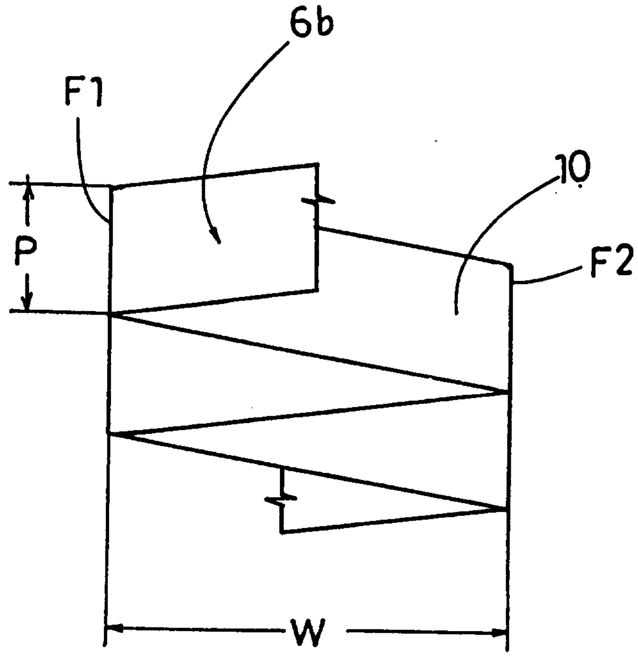

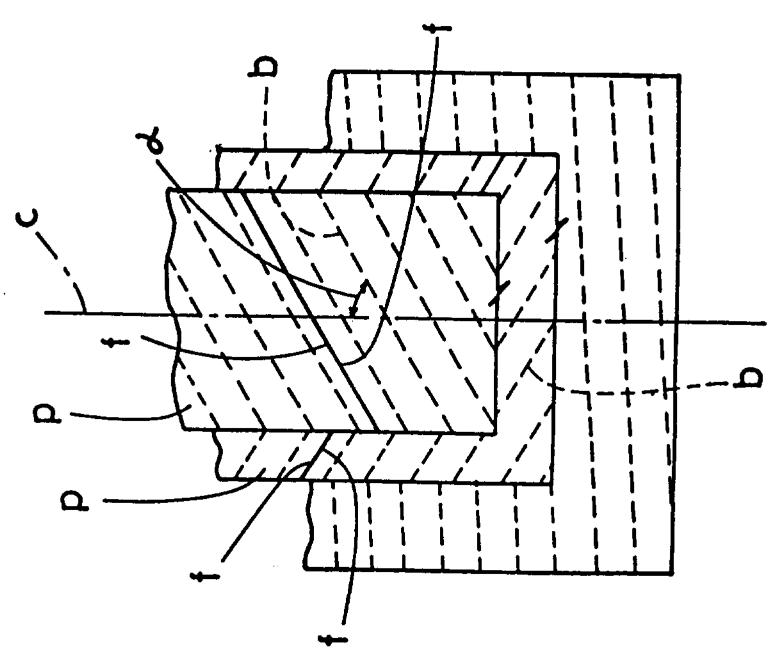


Fig. 7

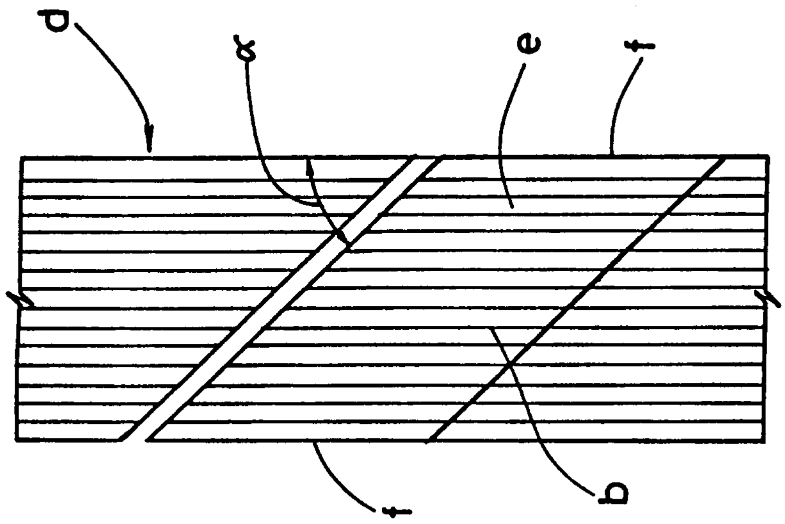


Fig. 8